# EUROPEAN PATENT APPLICATION

(11) **EP 4 477 875 A1**
(43) Date of publication of application: **18.12.2024**
(21) Application number: 24181601.6
(22) Date of filing: 12.06.2024
(51) Int. Cl.: F03D 9/25

(54) **AN ENERGY PRODUCTION SITE WITH DIFFERENT SIZE WIND TURBINES**

(30) Priority: 14.06.2023 DK PA202370290
(71) Applicant: Vattenfall AB, 169 92 Stockholm (SE)
(72) Inventor: HJORT, Thomas, 6000 Kolding (DK)
(74) Representative: Zacco Denmark A/S

(57) **Abstract**

An energy production site (5, 9) comprising a plurality of first type wind turbines (2) and a plurality of second type wind turbines (6) is disclosed, wherein the first type wind turbines (2) and the second type wind turbines (6) are horizontal axis wind turbines, wherein the axes of rotation of the second type rotors (8) are positioned lower than the axes of rotation of the first type rotors (4) and the second rotor diameter (RD2) is smaller than the first rotor diameter (RD1), and wherein the first type wind turbines (2) and the second type wind turbines (6) are distributed between each other across at least a part of the area of the energy production site (5, 9). Furthermore, methods for obtaining an increased energy extraction capacity by using such an energy production site (5, 9) are disclosed.

## Description

The present invention relates to an energy site comprising wind turbines of a least two different sizes, more particularly to an energy production site configuration and methods, in which the energy extraction capacity per unit area is increased compared to energy sites known in the art.

### Background of the invention

There is an increasing pressure to utilise the full potential of a site area when constructing an energy production site, such as a windfarm. However, the large size of modern wind turbines means that there must be a significant distance between such wind turbines to prevent a negative impact on the production from a given wind turbine from influence from neighbouring wind turbines, for instance due to turbulence, wake effects and shadow effects, etc.

This means that a significant part of the site area is "wasted" and that there is room for optimising the overall amount of energy produced per unit area of the energy production site. Therefore, it is not unusual to supplement the wind turbines with other forms of production, such as photovoltaic installations for electricity production or seaweed farming, if it is an offshore energy production site.

A need for better utilisation of an area, which is allocated for an energy production site, can also exist if, for instance for geographical or transportation related reasons, it is not possible to install many and big enough wind turbines within the area to utilise the nominal power rating of the energy transmission line available for the energy production site.

### Brief description of the invention

It is a purpose of the present invention to provide an energy production site configuration and methods, which increases the energy extraction capacity per unit area of the energy production site compared to energy productions sites known within the art.

The present invention relates to an energy production site comprising a plurality of first type wind turbines and a plurality of second type wind turbines, wherein the first type wind turbines and the second type wind turbines are horizontal axis wind turbines, wherein each of the first type wind turbines comprises a nacelle mounted on a first type tower, a first type rotor comprising one or more first type wind turbine blades describing a first rotor diameter, and an electrical generator driven by the first type rotor for converting rotation thereof into electrical power, wherein each of the second type wind turbines comprises a nacelle mounted on a second type tower, a second type rotor comprising one or more second type wind turbine blades describing a second rotor diameter, and an electrical generator driven by the second type rotor for converting rotation thereof into electrical power, wherein the axes of rotation of the second type rotors are positioned lower than the axes of rotation of the first type rotors and the second rotor diameter is smaller than the first rotor diameter, and wherein the first type wind turbines and the second type wind turbines are distributed between each other across at least a part of the area of the energy production site.

By placing the smaller second type wind turbines between the larger first type wind turbines, the energy extraction capacity from the energy production site can be increased significantly, because the second type wind turbines can produce energy without significantly influencing the energy production of the first type wind turbines. Because the second type wind turbines are smaller than the first type wind turbines, the addition of the second type wind turbines has only limited impact on the turbulence and wake effects on the site. The difference in height means that the interference of the smaller wind turbines on the larger ones is limited. Because a significant part of the rotor area of the larger wind turbines is situated above the rotors of the smaller wind turbines, the wake and turbulence impact of the larger wind turbines on the smaller wind turbines is limited, and normal considerations governing the layout of the energy production site do not apply.

If the wind turbines are suitably distributed between each other so that the integrity of both types of wind turbines is maintained, an increase of up to 40% of the installed capacity of the energy production site compared to an energy production site occupying the same area but comprising only the first type wind turbines may be obtained.

The type of the towers should be understood to include the height as well as the structure and all other features of the tower. The first and second type of tower can have the same or different structures, and they can belong to different IEC classes. This also means, for instance, that one or both types of towers may be configured to be supported by a floating foundation.

The second rotor diameter being smaller than the first rotor diameter means that the rated maximum power output of the second type wind turbines is smaller, such as at least 20%, for example at least 30% or at least 50% smaller, than the rated maximum power output of the first type wind turbines.

In an embodiment of the invention, the energy production site is an offshore energy production site.

Due to the existence of very large wind turbines, which are dedicated for offshore use, and the flat surface of the site area for offshore energy production sites, which reduces the height of the wind turbine towers needed to ensure that the wind turbine rotors are free of the "roughness constraints" known from many onshore energy production sites, the present invention is particularly suited for offshore installation. However, it could also find use on onshore energy production sites, where the conditions are suitable.

In an embodiment of the invention, the first type wind turbines and the second type wind turbines are of different types, such as being produced by different manufacturers, being controlled by different types of control systems, being originally produced as onshore and offshore wind turbines, respectively, etc.

Whereas the first type wind turbines are preferably of a type that would be chosen for optimising the energy production of the energy production site, if it had only comprises these first type wind turbines, the second type wind turbines can be of a less expensive type, such as older models and types, which are no longer "state-of-the-art". Even "second-hand" wind turbines, which have previously been used at other energy production sites, can be used as second type wind turbines in an energy production site according to the present invention. Also, onshore wind turbines, which typically have a higher production volume and therefore are more cost competitive, can be used as second type wind turbines in an offshore energy production site according to the present invention.

In an embodiment of the invention, the second rotor diameter is less than 60%, such as less than 55%, such as less than 50%, of the first rotor diameter.

For the optimum energy production capacity to be obtained without significant mutual disturbing effects, it has shown to be advantageous that the second rotor diameter must be significantly smaller than the first rotor diameter, such as about half the size of the first rotor diameter.

In an embodiment of the invention, the second rotor diameter is between 40% and 60%, preferably between 45% and 55%, most preferred 50%, of the first rotor diameter.

Rotor diameter differences within these ranges have proven to result in the optimum energy production capacity.

In an embodiment of the invention, the energy production site is an offshore site, and the first type wind turbines and the second type wind turbines are arranged in such a way that the difference between the average height over the sea level of the lowest point of the first type rotors and the average height over the sea level of the lowest point of the second type rotors is less than 20%, preferably less than 10%, most preferred less than 5% of the second rotor diameter, the average height being measured over time.

It has proven that the optimum energy production capacity is obtained, if the lowermost point of the rotors of both types is approximately the same. Due to the varying sea level, waves, etc., the height measurements must be averaged over a suitable amount of time.

In an embodiment of the invention, the first type wind turbines are positioned in such a way that the horizontal centre-to-centre distance between two neighbouring first type towers is between 3 and 10 times the first rotor diameter.

This distance have been found to ensure that the energy production of the first type wind turbines is not significantly disturbed by other wind turbines due to turbulence, wake effects, shadow effects and the like.

In an embodiment of the invention, the second type wind turbines are positioned in such a way that the horizontal centre-to-centre distance between any second type tower and the nearest first type tower or the nearest second type tower is between 3 and 10 times the second rotor diameter.

This distance have been found to ensure that the energy production of the second type wind turbines is not significantly disturbed by other wind turbines due to turbulence, wake effects, shadow effects and the like.

In an embodiment of the invention, the first type wind turbines constitute a first wind park and the second type wind turbines constitute a second wind park.

This means that the energy production site comprises two wind parks, which geographically coincide or at least overlap each other significantly.

In an embodiment of the invention, the first wind park and/or the second wind park further comprises an electrolyser arrangement for production of hydrogen using electrical power from the electrical generators of the wind turbines of that wind park, a hydrogen storage arrangement for storing hydrogen produced by the electrolyser arrangement, and one of the first wind park and the second wind park primarily generates electrical power to be directly transmitted to a utility grid, whereas the other one of the first wind park and the second wind park primarily generates hydrogen.

The produced hydrogen can be stored for later conversion to electrical power and transmission to a utility grid and/or it can be stored for shipping or collected by pipe for storing or export. It may also be processed locally or centrally, for instance for producing ammonia.

In an embodiment of the invention, one of the first wind park and the second wind park comprises an electrolyser arrangement configured to consume at least 30%, such as at least 50% of the maximum rated power output of that wind park, and the other one of the first wind park and the second wind park comprises no electrolyser arrangement or comprises an electrolyser arrangement configured to consume less than 20%, such as less than 10% of the maximum rated power output of that wind park.

In an embodiment of the invention, at least one of the first wind park and the second wind park, which comprises a hydrogen storage arrangement, also comprises an electrical power generation arrangement for converting the stored hydrogen into electrical power.

This enables for storing the produced energy in the form of hydrogen for a certain amount of time, which can be advantageous if, in some periods, more electricity is produced than the transmission line can handle.

In an embodiment of the invention, the first wind park and the second wind park use a common power transmission line for transmitting electrical power to a utility grid.

In an embodiment of the invention, the first wind park and the second wind park use different power transmission lines for transmitting electrical power to the same utility electrical grid or to different utility grids.

In an embodiment of the invention, the first wind park and the second wind park are operated independently from one another, such as by different park operators or by different park control systems.

Electric power produced by the first and the second wind park may be transmitted to the same or to different utility grids using a common or two separate transmission lines. If, for instance, the wind parks are operated by different park operators, it may be desired to operate the parks independently from each other and/or to transmit the produced electric power to different utility grids.

As examples of different utility grids could be mentioned utility grids with different points of connection, for instance in different countries, utility grids with different ownership and utility grids with different electrical systems.

Similarly, physical substances, such as hydrogen or ammonia, which are produced by the first and the second wind park, respectively, may be transported to the same or different piping collector grids or export systems using the same or different pipelines.

In an embodiment of the invention, the operation of the first wind park and the second wind park, respectively, is coordinated, e.g. by pitching and/or yawing or even idling one or more wind turbines, for instance so that the production of one of the first wind park and the second wind park may be prioritised over the production of the other one of the first wind park and the second wind park, based on wind conditions, electricity prices, etc.

The production can be prioritised in a number of different ways, such as
- Prioritising the first type wind turbines (the big turbines)
- Prioritising the second type wind turbines (the small turbines)
- Shifting the priority between the first type wind turbines and the second type wind turbines
- Prioritising between the different commodities (electricity, hydrogen production, etc.) supplied by the two types of wind turbines
- Maximizing the overall yield from the energy production site
- Minimizing the wear on the wind turbines
- Other control mechanisms known from the field of operating wind parks

In an embodiment of the invention, the energy production site further comprises a plurality of third type wind turbines, the third type wind turbines are horizontal axis wind turbines, each of the third type wind turbine comprises a nacelle mounted on a third type tower, a third type rotor comprising one or more third type wind turbine blades describing a third rotor diameter, and an electrical generator driven by the third type rotor for converting rotation thereof into electrical power, the axes of rotation of the third type rotors are positioned lower than the axes of rotation of the second type towers and the third rotor diameter is smaller than the second rotor diameter, and the third type wind turbines are distributed between the first type wind turbines and/or the second type wind turbines across at least a part of the area of the energy production site.

By using even smaller third type wind turbines between the smaller second type wind turbines and the larger first type wind turbines, the energy extraction capacity from the energy production site can be increased even further, such as to more than the double of the capacity of the first type wind turbines alone, because it is possible to add a significant number of third type wind turbines between the first type wind turbines and the second type wind turbines without significantly influencing the energy production thereof.

The third rotor diameter being smaller than the second rotor diameter means that the rated maximum power output of the third type wind turbines is smaller, such as at least 20%, for example at least 30% or at least 50% smaller, than the rated maximum power output of the second type wind turbines.

It is to be understood that the configuration, control and operation of a third wind park constituted by the third type wind turbines can vary in a number of ways and combined with the configurations, control and operation of the first wind park and the second wind park in many ways, similar to what is described above for the first wind park and the second wind park in an energy production site with only two wind parks.

In an embodiment of the invention, the third rotor diameter is less than 60%, such as less than 55%, such as less than 50%, of the second rotor diameter.

For the optimum energy production capacity to be obtained without significant mutual disturbing effects, it has shown to be advantageous that the third rotor diameter must be significantly smaller than the second rotor diameter, such as about half the size of the second rotor diameter.

In an embodiment of the invention, the third rotor diameter is between 40% and 60%, preferably between 45% and 55%, most preferred 50%, of the second rotor diameter.

Rotor diameter differences within these ranges have proven to result in the optimum energy production capacity.

In an embodiment of the invention, the energy production site is an offshore site, and the third type wind turbines are arranged in such a way that the difference between the average height over the sea level of the lowest point of the second type rotors and the average height over the sea level of the lowest point of the third type rotors is less than 20%, preferably less than 10%, most preferred less than 5% of the third rotor diameter, the average height being measured over time.

It has proven that the best cost/production ratio is obtained, if the lowermost point of the rotors of all three types is approximately the same. Due to the varying sea level, waves, etc., the height measurements must be averaged over a suitable amount of time.

In an embodiment of the invention, the third type wind turbines are positioned in such a way that the horizontal centre-to-centre distance between any third type tower and the nearest first type tower, the nearest second type tower or the nearest third type tower is between 3 and 10 times the third rotor diameter.

This distance have been found to ensure that the energy production of the first type wind turbines and second type wind turbines is not significantly disturbed by other wind turbines due to turbulence, wake effects, shadow effects and the like.

In another aspect of the invention, it relates to a method for increasing energy extraction capacity utilising an energy production site, which method comprises the steps of installing a plurality of first type wind turbines at the energy production site, and installing a plurality of second type wind turbines at the energy production site, wherein the first type wind turbines and the second type wind turbines are distributed across the area of the energy production site between each other, so that an energy production site as described above is obtained.

This aspect of the invention relates to the establishing of an energy production site as described above, in which the first type wind turbines and the second type wind turbines are both present from the beginning.

In an embodiment of the invention, the method further comprises the step of installing a plurality of third type wind turbines at the energy production site, wherein the third type wind turbines are distributed across the area of the energy production site between the first type wind turbines and the second type wind turbines, so that an energy production site as described above is obtained.

The step of installing the third type wind turbines can be performed simultaneously with or sometime later than the step of installing the first type wind turbines and the second type wind turbines.

In yet another aspect of the invention, it relates to a method for increasing the energy extraction capacity from an existing energy production site comprising a plurality of first type wind turbines distributed across the area of the energy production site, which method comprises the step of installing a plurality of second type wind turbines at the energy production site, wherein the second type wind turbines are distributed across the area of the energy production site between the first type wind turbines, so that an energy production site as described above is obtained.

This aspect of the invention relates to the retrofitting of an energy production comprising a first type wind turbines with a second type wind turbines for obtaining an energy production site as described above.

In an embodiment of the invention, the method further comprises the step of installing a plurality of third type wind turbines at the energy production site, wherein the third type wind turbines are distributed across the area of the energy production site between the first type wind turbines and the second type wind turbines, so that an energy production site as described above is obtained.

The step of installing the third type wind turbines can be performed simultaneously with or sometime later than the step of installing the second type wind turbines.

### Figures

A few exemplary embodiments of the invention are described in more detail in the following with reference to the figures, of which
- Fig. 1: shows a schematic layout of an energy production site as known within the art, comprising a single type of wind turbines,
- Fig. 2: is a schematic side view of wind turbines of the energy production site shown in Fig. 1,
- Fig. 3: shows a schematic layout of an energy production site according to an embodiment of the invention, comprising two different types of wind turbines,
- Fig. 4: is a schematic side view of wind turbines of the energy production site shown in Fig. 3,
- Fig. 5: shows a schematic layout of an energy production site according to another embodiment of the invention, comprising three different types of wind turbines,
- Fig. 6: is a schematic side view of wind turbines of the energy production site shown in Fig. 5, and
- Fig. 7: schematically illustrates the differences in rotor diameter between the of wind turbines of the energy production sites shown in Figs. 3 and 5.

### Detailed description of the invention

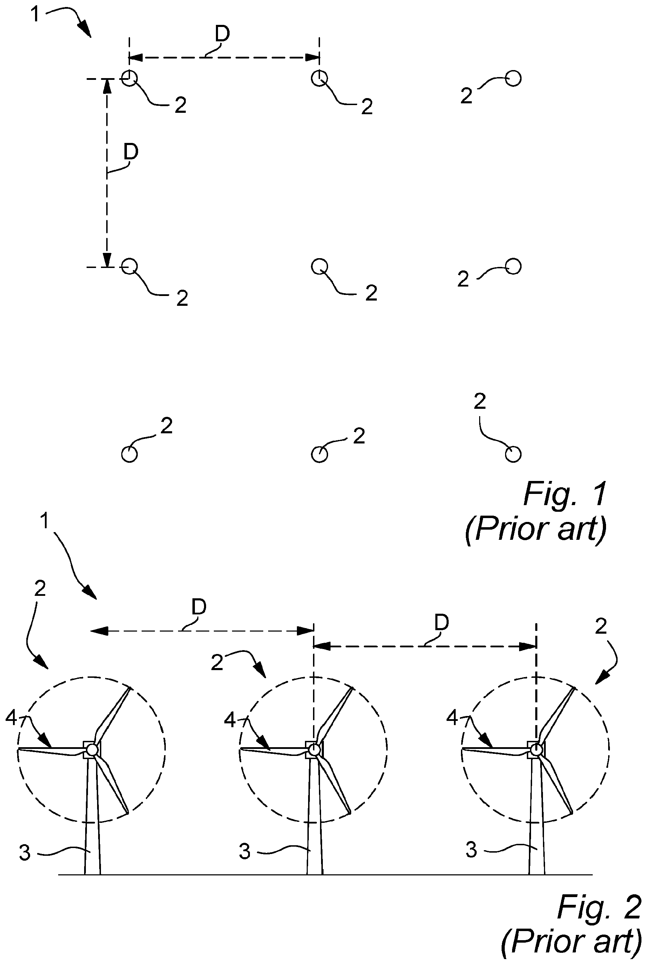

Fig. 1 shows a schematic layout of an energy production site 1 as known within the art, comprising a plurality of first type wind turbines 2. In the illustrated layout, the first type wind turbines 2 are arranged in straight lines forming a two-dimensional array, the distance D between any of the first type wind turbines 2 and it closest neighbouring first type wind turbine 2 being the same in both dimensions of this array. It should be noticed that this simplicity of the illustrated layout is merely chosen for the sake of clarity and that, as it will be known to the person skilled in the art, the first type wind turbines 2 may be distributed or scattered across the energy production site 1 in a various number of different ways and patterns, often depending on the landscape if the energy production site 1 is an onshore site 1.

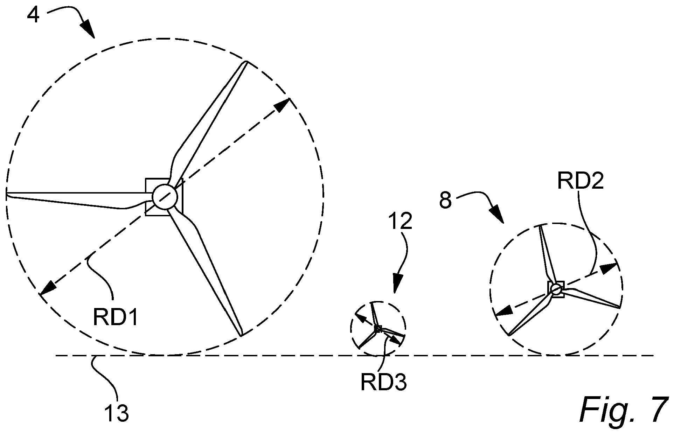

Fig. 2 is a schematic front view of some first type wind turbines 2 of the energy production site 1 shown in Fig. 1. It illustrates that the first type wind turbines 2 are horizontal axis wind turbines comprising a first type tower 3 and a first type rotor 4. Fig. 7 shows how the first type rotor 4 describes a first rotor diameter RD1. Fig. 2 further illustrates that the distance D between two neighbouring first type wind turbines 2 is defined as the horizontal centre-to-centre distance D between two neighbouring first type towers 3.

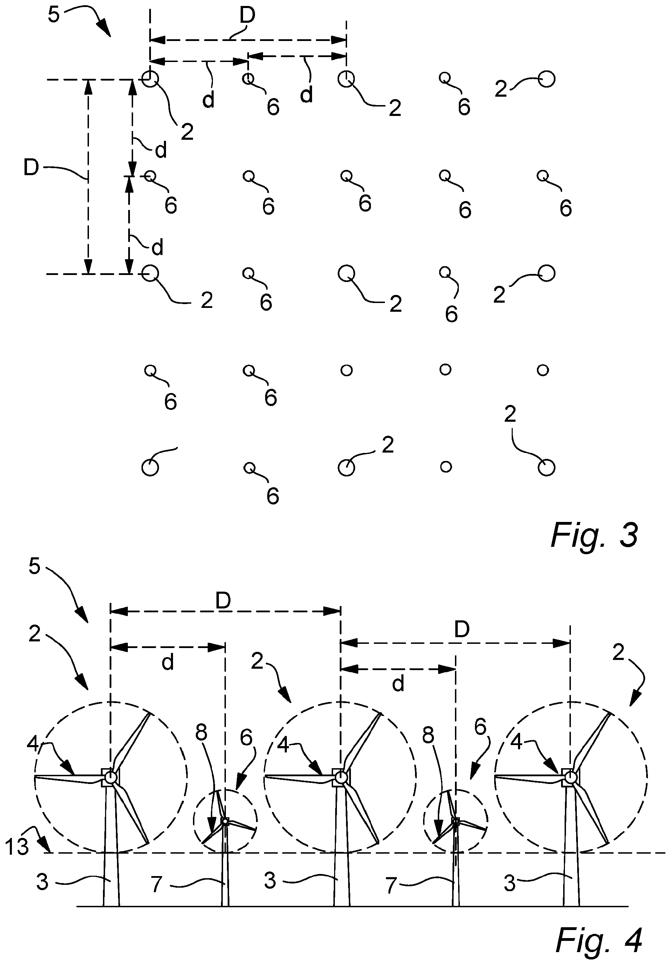

Fig. 3 shows a schematic layout of an energy production site 5 according to an embodiment of the invention, comprising two different types of wind turbines 2, 6. In the illustrated layout, a plurality of first type wind turbines 2 are arranged in a two-dimensional array like in Fig. 1, and a plurality of second type wind turbines 6 are arranged in between the first type wind turbines 2 in such a way that the distance d between any of the second type wind turbines 6 and its closest neighbouring first type wind turbine 2 or second type wind turbine 6 is the same in both dimensions of this array. Again, it should be noticed that the simplicity of the illustrated layout of the energy production site 5 is merely chosen for the sake of clarity and that the first type wind turbines 2 and the second type wind turbines 6 may be distributed or scattered across the energy production site 5 in a various number of different ways and patterns. The important thing is not that the distance d to neighbouring wind turbines 2, 6 is the same in all directions, but that the distance d to each of the neighbouring wind turbines 2, 6 is sufficient to avoid significant disturbances in the form of turbulence, wake effects, shadow effects and the like.

Fig. 4 is a schematic front view of some first type wind turbines 2 and some second type wind turbines 6 of the energy production site 5 shown in Fig. 3. It illustrates that also the second type wind turbines 6 are horizontal axis wind turbines comprising a second type tower 7 and a second type rotor 8. Fig. 7 shows how the second type rotor 8 describes a second rotor diameter RD2. Fig. 4 further illustrates that the distance d between a second type wind turbine 6 and a neighbouring first type wind turbine 2 or second type wind turbine 6 is defined as the horizontal centre-to-centre distance d between the towers 3, 7 of the two wind turbines 2, 6 in question.

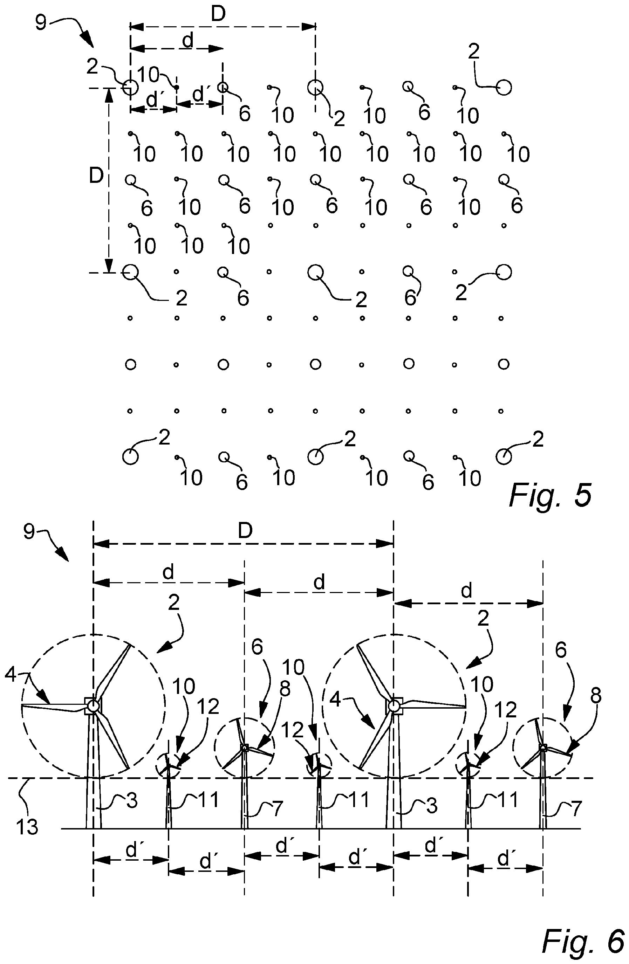

Fig. 5 shows a schematic layout of an energy production site 9 according to an embodiment of the invention, comprising tree different types of wind turbines (2, 6, 10). In the illustrated layout, a plurality of first type wind turbines 2 and second type wind turbines 6 are arranged in a two-dimensional array like in Fig. 3, and a plurality of third type wind turbines 10 are arranged in between the first type wind turbines 2 and the second type wind turbines 6 in such a way that the distance d' between any of the third type wind turbines 10 and its closest neighbouring first type wind turbine 2, second type wind turbine 6 or third type wind turbine 10 is the same in both dimensions of this array. Once again, it should be noticed that the simplicity of the illustrated layout of the energy production site 9 is merely chosen for the sake of clarity and that the first type wind turbines 2, the second type wind turbines 6 and the third type wind turbines 10 may be distributed or scattered across the energy production site 9 in a various number of different ways and patterns. The important thing is not that the distance d' to neighbouring wind turbines 2, 6, 10 is the same in all directions, but that the distance d' to each of the neighbouring wind turbines 2, 6, 10 is sufficient to avoid significant disturbances in the form of turbulence, wake effects, shadow effects and the like.

Fig. 6 is a schematic front view of some first type wind turbines 2, some second type wind turbines 6 and some third type wind turbines 10 of the energy production site 9 shown in Fig. 5. It illustrates that also the third type wind turbines 10 are also horizontal axis wind turbines comprising a third type tower 11 and a third type rotor 12. Fig. 7 shows how the third type rotor 12 describes a third rotor diameter RD3. Fig. 6 further illustrates that the distance d' between a third type wind turbine 10 and a neighbouring first type wind turbine 2, second type wind turbine 6 or third type wind turbine 10 is defined as the horizontal centre-to-centre distance d' between the towers 3, 7, 11 of the two wind turbines 2, 6, 10 in question.

As mentioned above, Fig. 7 illustrates the different rotor diameters RD1, RD2, RD3 of the first type rotor 4, the second type rotor 8 and the third type rotor 12, respectively. Apart from that, Fig. 7 also illustrates (as do Figs. 4 and 6) how, for preferred embodiments of the invention, especially ones in which the energy production site 5, 9 is an offshore site, the first type wind turbines 2, the second type wind turbines 6 and, where applicable, the third type wind turbines 10 are arranged with a common lower rotor limit 13. This means that the average heights of the lowest points of the first type rotors 4, the second type rotors 8 and, where applicable, the third type rotors 12 are all aligned at, or at least within limited predefined distance from, this common lower rotor limit 13, these average heights being measured over time.

### ITEMS:

1. An energy production site (5, 9) comprising a plurality of first type wind turbines (2) and a plurality of second type wind turbines (6),
   wherein the first type wind turbines (2) and the second type wind turbines (6) are horizontal axis wind turbines,
   wherein each of the first type wind turbines (2) comprises
      a nacelle mounted on a first type tower (3),
      a first type rotor (4) comprising one or more first type wind turbine blades describing a first rotor diameter (RD1), and
      an electrical generator driven by the first type rotor (4) for converting rotation thereof into electrical power,
   wherein each of the second type wind turbines (6) comprises
      a nacelle mounted on a second type tower (7),
      a second type rotor (8) comprising one or more second type wind turbine blades describing a second rotor diameter (RD2), and
      an electrical generator driven by the second type rotor (8) for converting rotation thereof into electrical power,
   wherein the axes of rotation of the second type rotors (8) are positioned lower than the axes of rotation of the first type rotors (4) and the second rotor diameter (RD2) is smaller than the first rotor diameter (RD1), and
   wherein the first type wind turbines (2) and the second type wind turbines (6) are distributed between each other across at least a part of the area of the energy production site (5; 9).
2. The energy production site (5, 9) according to item 1, wherein the energy production site (5, 9) is an offshore energy production site.
3. The energy production site (5, 9) according to any of the preceding items, wherein the first type wind turbines (2) and the second type wind turbines (6) are of different types, such as being produced by different manufacturers, being controlled by different types of control systems, being originally produced as onshore and offshore wind turbines, respectively, etc.
4. The energy production site (5, 9) according to any of the preceding items, wherein the second rotor diameter (RD2) is less than 60%, such as less than 55%, such as less than 50%, of the first rotor diameter (RD1).
5. The energy production site (5, 9) according to item 4, wherein the second rotor diameter (RD2) is between 40% and 60%, preferably between 45% and 55%, most preferred 50%, of the first rotor diameter (RD1).
6. The energy production site (5, 9) according to any of the preceding items, wherein the energy production site (5, 9) is an offshore site, and wherein the first type wind turbines (2) and the second type wind turbines (6) are arranged in such a way that the difference between the average height over the sea level of the lowest point of the first type rotors (4) and the average height over the sea level of the lowest point of the second type rotors (8) is less than 20%, preferably less than 10%, most preferred less than 5% of the second rotor diameter (RD2), the average height being measured over time.
7. The energy production site (5, 9) according to any of the preceding items, wherein the first type wind turbines (2) are positioned in such a way that the horizontal centre-to-centre distance (D) between two neighbouring first type towers (3) is between 3 and 10 times the first rotor diameter (RD1).
8. The energy production site (5, 9) according to any of the preceding items, wherein the second type wind turbines (6) are positioned in such a way that the horizontal centre-to-centre distance (d) between any second type tower (7) and the nearest first type tower (3) or the nearest second type tower (7) is between 3 and 10 times the second rotor diameter (RD2).
9. The energy production site (5, 9) according to any of the preceding items, wherein the first type wind turbines (2) constitute a first wind park and the second type wind turbines (6) constitute a second wind park.
10. The energy production site (5, 9) according to item 9, wherein the first wind park and/or the second wind park further comprises
   an electrolyser arrangement for production of hydrogen using electrical power from the electrical generators of the wind turbines (2, 6) of that wind park,
   a hydrogen storage arrangement for storing hydrogen produced by the electrolyser arrangement, and
   wherein one of the first wind park and the second wind park primarily generates electrical power to be directly transmitted to a utility grid, whereas the other one of the first wind park and the second wind park primarily generates hydrogen.
11. The energy production site (5, 9) according to item 10, wherein one of the first wind park and the second wind park comprises an electrolyser arrangement configured to consume at least 30%, such as at least 50% of the maximum rated power output of that wind park, and
   wherein the other one of the first wind park and the second wind park comprises no electrolyser arrangement or comprises an electrolyser arrangement configured to consume less than 20%, such as less than 10% of the maximum rated power output of that wind park.
12. The energy production site (5, 9) according to item 10 or 11, wherein at least one of the first wind park and the second wind park, which comprises a hydrogen storage arrangement, also comprises an electrical power generation arrangement for converting the stored hydrogen into electrical power.
13. The energy production site (5, 9) according to any of items 9-12, wherein the first wind park and the second wind park use a common power transmission line for transmitting electrical power to a utility grid.
14. The energy production site (5, 9) according to any of items 9-12, wherein the first wind park and the second wind park use different power transmission lines for transmitting electrical power to the same utility electrical grid or to different utility grids.
15. The energy production site (5, 9) according to any of items 9-14, wherein the first wind park and the second wind park are operated independently from one another, such as by different park operators or by different park control systems.
16. The energy production site (5, 9) according to any items 9-14, wherein the operation of the first wind park and the second wind park, respectively, is coordinated, e.g. by pitching and/or yawing or even idling one or more wind turbines, for instance so that the production of one of the first wind park and the second wind park may be prioritised over the production of the other one of the first wind park and the second wind park, based on wind conditions, electricity prices, etc.
17. The energy production site (9) according to any of the preceding items, wherein the energy production site (9) further comprises a plurality of third type wind turbines (10),
   wherein the third type wind turbines (10) are horizontal axis wind turbines,
   wherein each of the third type wind turbines (10) comprises
      a nacelle mounted on a third type tower (11),
      a third type rotor (12) comprising one or more third type wind turbine blades describing a third rotor diameter (RD3), and
      an electrical generator driven by the third type rotor (12) for converting rotation thereof into electrical power,
   wherein the axes of rotation of the third type rotors (12) are positioned lower than the axes of rotation of the second type rotors (8) and the third rotor diameter (RD3) is smaller than the second rotor diameter (RD2), and
   wherein the third type wind turbines (10) are distributed between the first type wind turbines (2) and/or the second type wind (6) turbines across at least a part of the area of the energy production site (9).
18. The energy production site (9) according to item 17, wherein the third rotor diameter (RD3) is less than 60%, such as less than 55%, such as less than 50%, of the second rotor diameter (RD2).
19. The energy production site (9) according to item 18, wherein the third rotor diameter (RD3) is between 40% and 60%, preferably between 45% and 55%, most preferred 50%, of the second rotor diameter (RD2).
20. The energy production site (9) according to any of items 17-19, wherein the energy production site is an offshore site, and wherein the third type wind turbines (10) are arranged in such a way that the difference between the average height over the sea level of the lowest point of the second type rotors (8) and the average height over the sea level of the lowest point of the third type rotors (12) is less than 20%, preferably less than 10%, most preferred less than 5% of the third rotor diameter (RD3), the average height being measured over time.
21. The energy production site (9) according to any of items 17-20, wherein the third type wind turbines (10) are positioned in such a way that the horizontal centre-to-centre distance (d') between any third type tower (11) and the nearest first type tower (3), the nearest second type tower (7) or the nearest third type tower (11) is between 3 and 10 times the third rotor diameter (RD3).
22. A method for increasing energy extraction capacity utilising an energy production site (5, 9), which method comprises the steps of
   installing a plurality of first type wind turbines (2) at the energy production site (5, 9), and
   installing a plurality of second type wind turbines (6) at the energy production site (5, 9),
   wherein the first type wind turbines (2) and the second type wind turbines (6) are distributed across the area of the energy production site (5, 9) between each other, so that an energy production site (5, 9) according to any of items 1-16 is obtained.
23. The method according to item 22 further comprising the step of installing a plurality of third type wind turbines (10) at the energy production site (9),
   wherein the third type wind turbines (10) are distributed across the area of the energy production site (9) between the first type wind turbines (2) and the second type wind turbines (6), so that an energy production site (9) according to any of items 17-21 is obtained.
24. A method for increasing the energy extraction capacity from an existing energy production site (1) comprising a plurality of first type wind turbines (2) distributed across the area of the energy production site (1), which method comprises the step of installing a plurality of second type wind turbines (6) at the energy production site (1),
   wherein the second type wind turbines (6) are distributed across the area of the energy production site (1) between the first type wind turbines (2), so that an energy production site (5, 9) according to any of items 1-16 is obtained.
25. The method according to item 24 further comprising the step of installing a plurality of third type wind turbines (10) at the energy production site (5),
   wherein the third type wind turbines (10) are distributed across the area of the energy production site (5) between the first type wind turbines (2) and the second type wind turbines (6), so that an energy production site (9) according to any of items 17-21 is obtained.

### List of references

- 1.: Energy production site with a single type of wind turbines
- 2.: First type wind turbine
- 3.: First type tower
- 4.: First type rotor
- 5.: Energy production site with two different types of wind turbines
- 6.: Second type wind turbine
- 7.: Second type tower
- 8.: Second type rotor
- 9.: Energy production site with three different types of wind turbines
- 10.: Third type wind turbine
- 11.: Third type tower
- 12.: Third type rotor
- 13.: Common lower rotor limit
- D.: Distance between two neighbouring first type wind turbines
- d.: Distance between a second type wind turbine and a neighbouring first type wind turbine or second type wind turbine
- d'.: Distance between a third type wind turbine and a neighbouring wind turbine
- RD1.: First rotor diameter
- RD2.: Second rotor diameter
- RD3.: Third rotor diameter

## Claims

1. An energy production site (5, 9) comprising a plurality of first type wind turbines (2) and a plurality of second type wind turbines (6),
wherein the first type wind turbines (2) and the second type wind turbines (6) are horizontal axis wind turbines,
wherein each of the first type wind turbines (2) comprises
a nacelle mounted on a first type tower (3),
a first type rotor (4) comprising one or more first type wind turbine blades describing a first rotor diameter (RD1), and
an electrical generator driven by the first type rotor (4) for converting rotation thereof into electrical power,
wherein each of the second type wind turbines (6) comprises
a nacelle mounted on a second type tower (7),
a second type rotor (8) comprising one or more second type wind turbine blades describing a second rotor diameter (RD2), and
an electrical generator driven by the second type rotor (8) for converting rotation thereof into electrical power,
wherein the axes of rotation of the second type rotors (8) are positioned lower than the axes of rotation of the first type rotors (4) and the second rotor diameter (RD2) is smaller than the first rotor diameter (RD1), and
wherein the first type wind turbines (2) and the second type wind turbines (6) are distributed between each other across at least a part of the area of the energy production site (5; 9).

2. The energy production site (5, 9) according to claim 1, wherein the energy production site (5, 9) is an offshore energy production site.

3. The energy production site (5, 9) according to any of the preceding claims, wherein the first type wind turbines (2) and the second type wind turbines (6) are of different types, such as being produced by different manufacturers, being controlled by different types of control systems, being originally produced as onshore and offshore wind turbines, respectively, etc.

4. The energy production site (5, 9) according to any of the preceding claims, wherein the second rotor diameter (RD2) is less than 60%, such as less than 55%, such as less than 50%, of the first rotor diameter (RD1).

5. The energy production site (5, 9) according to any of the preceding claims, wherein the energy production site (5, 9) is an offshore site, and wherein the first type wind turbines (2) and the second type wind turbines (6) are arranged in such a way that the difference between the average height over the sea level of the lowest point of the first type rotors (4) and the average height over the sea level of the lowest point of the second type rotors (8) is less than 20%, preferably less than 10%, most preferred less than 5% of the second rotor diameter (RD2), the average height being measured over time.

6. The energy production site (5, 9) according to any of the preceding claims, wherein the first type wind turbines (2) are positioned in such a way that the horizontal centre-to-centre distance (D) between two neighbouring first type towers (3) is between 3 and 10 times the first rotor diameter (RD1).

7. The energy production site (5, 9) according to any of the preceding claims, wherein the second type wind turbines (6) are positioned in such a way that the horizontal centre-to-centre distance (d) between any second type tower (7) and the nearest first type tower (3) or the nearest second type tower (7) is between 3 and 10 times the second rotor diameter (RD2).

8. The energy production site (5, 9) according to any of the preceding claims, wherein the first type wind turbines (2) constitute a first wind park and the second type wind turbines (6) constitute a second wind park.

9. The energy production site (5, 9) according to the preceding claim, wherein the first wind park and/or the second wind park further comprises
an electrolyser arrangement for production of hydrogen using electrical power from the electrical generators of the wind turbines (2, 6) of that wind park,
a hydrogen storage arrangement for storing hydrogen produced by the electrolyser arrangement, and
wherein one of the first wind park and the second wind park primarily generates electrical power to be directly transmitted to a utility grid, whereas the other one of the first wind park and the second wind park primarily generates hydrogen.

10. The energy production site (5, 9) according to any of claims 8-9, wherein the first wind park and the second wind park use a common power transmission line for transmitting electrical power to a utility grid.

11. The energy production site (5, 9) according to any of claims 8-9, wherein the first wind park and the second wind park use different power transmission lines for transmitting electrical power to the same utility electrical grid or to different utility grids.

12. The energy production site (5, 9) according to any of claims 8-11, wherein the first wind park and the second wind park are operated independently from one another, such as by different park operators or by different park control systems.

13. The energy production site (5, 9) according to any of claims 8-11, wherein the operation of the first wind park and the second wind park, respectively, is coordinated, e.g. by pitching and/or yawing or even idling one or more wind turbines, for instance so that the production of one of the first wind park and the second wind park may be prioritised over the production of the other one of the first wind park and the second wind park, based on wind conditions, electricity prices, etc.

14. The energy production site (9) according to any of the preceding claims, wherein the energy production site (9) further comprises a plurality of third type wind turbines (10),
wherein the third type wind turbines (10) are horizontal axis wind turbines,
wherein each of the third type wind turbines (10) comprises
a nacelle mounted on a third type tower (11),
a third type rotor (12) comprising one or more third type wind turbine blades describing a third rotor diameter (RD3), and
an electrical generator driven by the third type rotor (12) for converting rotation thereof into electrical power,
wherein the axes of rotation of the third type rotors (12) are positioned lower than the axes of rotation of the second type rotors (8) and the third rotor diameter (RD3) is smaller than the second rotor diameter (RD2), and
wherein the third type wind turbines (10) are distributed between the first type wind turbines (2) and/or the second type wind (6) turbines across at least a part of the area of the energy production site (9).

15. A method for increasing energy extraction capacity utilising an energy production site (5, 9), which method comprises the steps of
installing a plurality of first type wind turbines (2) at the energy production site (5, 9), and
installing a plurality of second type wind turbines (6) at the energy production site (5, 9),
wherein the first type wind turbines (2) and the second type wind turbines (6) are distributed across the area of the energy production site (5, 9) between each other, so that an energy production site (5, 9) according to any of claims 1-14 is obtained.

16. A method for increasing the energy extraction capacity from an existing energy production site (1) comprising a plurality of first type wind turbines (2) distributed across the area of the energy production site (1), which method comprises the step of installing a plurality of second type wind turbines (6) at the energy production site (1),
wherein the second type wind turbines (6) are distributed across the area of the energy production site (1) between the first type wind turbines (2), so that an energy production site (5, 9) according to any of claims 1-13 is obtained.

17. The method according to the preceding claim further comprising the step of installing a plurality of third type wind turbines (10) at the energy production site (5),
wherein the third type wind turbines (10) are distributed across the area of the energy production site (5) between the first type wind turbines (2) and the second type wind turbines (6), so that an energy production site (9) according to claim 14 is obtained.
